# EUROPEAN PATENT APPLICATION

(11) **EP 2 048 413 A1**
(43) Date of publication of application: **15.04.2009**
(21) Application number: 08253239.1
(22) Date of filing: 06.10.2008
(51) Int. Cl.: F16H 25/20, F16H 25/24

(54) **Actuator arrangement**

(30) Priority: 09.10.2007 GB 0719689
(71) Applicant: Goodrich Actuation Systems Limited, Sollhull B90 4LA (GB)
(72) Inventor: Jones, Tony, Northfield, Birmingham B31 2EH (GB); Bacon, Peter William, The Wergs, Wolverhampton WV6 7TZ (GB)
(74) Representative: Bailey, Richard Alan

(57) **Abstract**

An actuator arrangement comprises a rotatable shaft (10), a no-back device (20) operable to apply a braking load to the shaft (10), a drive arrangement (26) operable to drive the shaft (10) for rotation, and an indicator member (50), wherein the drive arrangement (26) includes a differential drive (27) operable to drive the indicator member (50) for movement.

## Description

This invention relates to an actuator arrangement, and in particular to a linear actuator arrangement of the type including a rotatable shaft upon which is located a translatable nut, a roller or ball screw coupling being provided therebetween such that rotation of the shaft drives the nut for translation along the shaft. Such an actuator is suitable for use in a number of applications, for example in driving the thrust reverser cowls or other components of an aircraft between stowed and deployed positions.

The actuators used in driving a thrust reverser cowl typically include a so-called no-back device operable to apply a braking load to the actuator to counter externally applied aiding loads and thereby reduce the risk of uncontrolled movement of the cowls or other components moved using the actuator. Such no-back devices include friction brake components which wear, in use, and one object of the invention is to provide an actuator arrangement including a sensor arrangement operable to detect whether or not the no-back device is operating correctly.

According to the present invention there is provided an actuator arrangement comprising a rotatable shaft, a no-back device operable to apply a braking load to the shaft, a drive arrangement operable to drive the shaft for rotation, and an indicator member, wherein the drive arrangement includes a differential drive operable to drive the indicator member for movement.

Such an arrangement is advantageous in that, during operation, when the braking load applied by the no-back device is less than expected and less than the resistance to movement of the indicator member, the differential drive will drive the indicator member for movement relative to the shaft, the movement providing an indication that the no-back device is not operating correctly. Preferably, the indicator member is movable axially of the shaft.

A sensor may be provided, the sensor monitoring the position or movement of the indicator member.

Preferably, stop means are provided to limit movement of the indicator member. The stop means are important in that, once the indicator member has reached the stop means, the differential drive operates to increase the magnitude of the driving load applied to the shaft.

A translatable nut is conveniently mounted upon the shaft, the nut being arranged to translate along the shaft upon rotation of the shaft.

A lock arrangement is preferably provided to lock the nut and shaft against relative rotation. The lock arrangement preferably includes a lock component mounted for axial movement relative to the shaft but held against angular movement relative to the shaft, the lock component being co-operable with the nut to lock the nut to the shaft and thereby prevent relative rotation therebetween. The drive arrangement is preferably operable to drive the lock component axially relative to the shaft to release the lock arrangement. The indicator member conveniently forms part of or is associated with the lock arrangement, for example it may form the lock component.

According to another aspect of the invention there is provided an actuator arrangement comprising a rotatable shaft, a nut mounted upon the shaft and translatable along the shaft upon rotation of the shaft, and a lock arrangement operable to lock the shaft and nut against relative rotation, the lock arrangement comprising a lock component mounted upon one of the shaft and the nut for axial movement but held against angular movement relative thereto, the lock component being co-operable with the other of the shaft and the nut, or a component associated therewith, to lock the shaft and nut to one another.

The invention will further be described, by way of example, with reference to the accompanying drawings, in which:
Figure 1 is a view illustrating an actuator arrangement in accordance with one embodiment of the invention; and
Figure 2 is a diagrammatic view illustrating part of the arrangement of Figure 1.

The actuator arrangement illustrated in the accompanying drawings comprises a shaft 10 which is mounted to a housing 12 and supported by bearings 14 for rotation. Axial movement of the shaft 10 is prevented or limited by the bearings 14. A nut 16 is mounted upon the shaft 10 by a ball screw type coupling 18. The nut 16 is connected to a cowl or other component to be moved by the actuator arrangement, in use, the nature of the connection of the nut 16 to the cowl or other component being such that the nut 16 is held against angular or rotary motion. It will be appreciated that, in use, rotation of the shaft 10 causes the nut 16 to translate axially along the shaft 10, the direction of rotary movement of the shaft 10 determining the direction in which the nut 16 translates, thus rotation of the shaft 10 drives the cowl or other component for movement.

A no-back device 20 is connected between the shaft 10 and the housing 12, the no-back device 20 having a friction brake 22 and being operable to apply a braking load to the shaft 10, resisting rotary movement of the shaft 10 in one rotary direction, the no-back device 20 further incorporating a ratchet mechanism 24 which is operable to avoid the application of the braking load when the shaft 10 is rotated in the opposite direction. A no-back device 20 of this general type is described and illustrated in EP 1378685. Although the illustrated no-back device is of the type incorporating a ratchet mechanism 24, a no-back device of the type in which no such ratchet mechanism is provided and a braking load is applied in both rotary directions of the shaft 10 could be used, if desired. No-back devices of this and other forms are well known and the no-back device will not be described in further detail as the specific design of the no-back device is not of relevance to the invention.

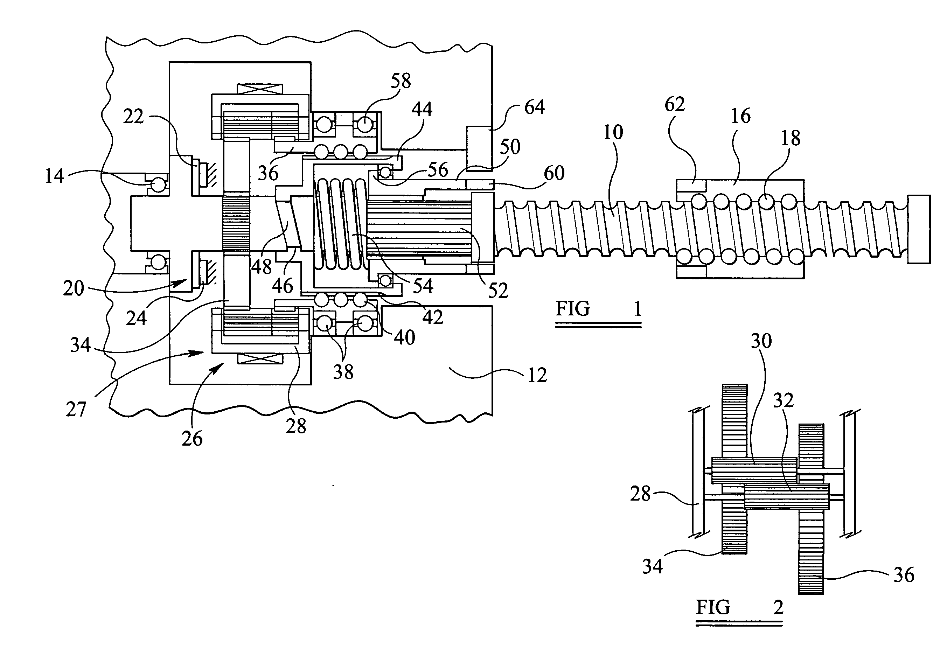

The shaft 10 is arranged to be driven for rotation by a drive arrangement 26 including a differential drive 27 in the form of a rotatable carriage 28 arranged to be driven by a motor (not shown), for example via a bevel gear from a synchronising shaft, or via a worm gear or directly by the motor. The carriage 28 carries a plurality of pairs of first planet gears 30 and second planet gears 32, each pair of planet gears 30, 32 being in meshing engagement with one another, as shown in Figure 2. It is envisaged that three or more pairs of planet gears 30, 32 may be provided, but more or fewer may be present. The first planet gears 30 each further mesh with the teeth of a drive gear 34 mounted upon the shaft 10. It should be noted that the second planet gears 32 do not engage the drive gear 34. Rather, the second planet gears 32 are in meshing engagement with teeth formed on or associated with a secondary drive gear 36, the first planet gears 30 not cooperating with the secondary drive gear 36. The differential drive 27 applies the input drive load to the drive gear 34 and secondary drive gear 36 in an inverse relationship to the resistance to rotation thereof, ie drive is preferentially applied to the gear experiencing least resistance to rotation at any time.

The secondary drive gear 36 is mounted for rotation within the housing 12 by bearings 38, the secondary drive gear 36 being coaxial with, and encircling part of, the shaft 10. The secondary drive gear 36 is provided, internally, with recesses supporting balls 40 which ride in axially extending grooves 42 formed in the periphery of a coupling 44, the balls 40 and grooves 42 serving to drive the coupling 44 for rotation with the secondary drive gear 36 whilst permitting the coupling 44 to move axially. The coupling 44 is provided with an inwardly extending formation or series of formations 46 which cooperate with a shallow pitch helical recess 48 formed in the shaft 10 such that rotation of the secondary drive gear 36 and coupling 44 relative to the shaft 10 drives the coupling 44 for limited axial movement relative to the shaft 10, the movement being limited by the engagement of the formations 46 with the ends of the recess 48.

A lock and indicator member 50 encircles the shaft 10 and is splined thereto by formations 52 such that the member 50 is movable axially relative to the shaft 10, the spline formations 52 preventing rotation of the member 50 relative to the shaft 10. A spring 54 is engaged between the member 50 and the coupling 44, the spring 54 urging the member 50 to the right, in the orientation illustrated. The member 50 includes, at its left-hand most end, in the orientation illustrated, an outwardly extending flange 56 which is co-operable with a bearing 58 carried by the coupling 44 so that the member 50 is held captive to the coupling 44.

The right-hand most end of the member 50 is shaped to define a pair of projections 60 receivable within corresponding recesses 62 formed in the nut 16 in the manner of a dog clutch, when the nut 16 occupies its left-hand most, retracted position. When the projections are received within the recesses 62, it will be appreciated that relative rotation between the nut 16 and the member 50 is not permitted.

A sensor 64 is arranged to monitor or sense the position of the member 50. The sensor 64 could comprise a proximity sensor of a range of forms, for example a microswitch, capacitance, optical or Hall effect based sensor could be used. An inductive position sensor is currently preferred.

In use, starting from the retracted position in which the nut 16 occupies its left-hand most position and the member 50 occupies a locked position in which the projections 60 are received within the recesses 62 of the nut 16, it will be appreciated that the shaft 10 and nut 16 are locked to one another against relative rotation as the member 50 is in non-rotatable engagement with both the shaft 10 (by virtue of the spline formations 52) and the nut 16 (by virtue of the dog clutch type coupling). The actuator arrangement is thus locked against extension.

When extension of the actuator arrangement is required, the carriage 28 is driven for rotation. As, at this time, the nut 16 and shaft 10 are locked to one another against relative rotation and the nut 16 is held against rotation by virtue of its mounting to the cowl or other component with which it is associated, it will be appreciated that the shaft 10 and drive gear 34 are held against rotation. The movement of the carriage 28 drives the first planet gears 30, causing them to precess around the drive gear 34, and the meshing of the planet gears 30, 32 of each pair causes the second planet gears 32 to rotate, in turn driving the secondary drive gear 36 for rotation. The rotation of the secondary drive gear 36 is transmitted to the coupling 44 which, by virtue of its helical coupling to the shaft 10, moves axially along the shaft 10. The axial movement of the coupling 44 is transmitted to the member 50 which is held captive thereto, retracting the projections 60 from the recesses 62, thus releasing the lock between the nut 16 and the shaft 10. The movement of the member 50 is sensed by the sensor 64, thus providing a signal to the associated circuitry indicating that the lock has been released.

Continued rotation of the carriage 28 once the lock has been released will result in the coupling 44 continuing to move until the formations 46 reach the end of the helical groove 48, the shaft 10 continuing to have a higher resistance to movement than the lock arrangement due to the operation of the no-back device 20. However, once the formations 46 reach the end of the helical groove 48, the secondary drive gear 36 effectively becomes earthed, increasing its resistance to rotation, and so the applied drive is transmitted through the differential drive 27 to the shaft 10, driving the shaft 10 for rotation against the action of the no-back device 20 and causing the nut 16 to translate along the shaft 10, thereby moving the cowl or other component towards its deployed position. During this movement, the coupling 44 will remain in its retracted position in which the formations 46 are located at the end of the groove 48 due to the operation of the no-back device 20 applying its braking load to the shaft 10, resisting the aiding loads applied to the actuator, in use.

Return movement is achieved by rotating the shaft 10 in the opposite direction, and this is achieved by reversing the direction of rotation of the carriage 28. Due to external loads, friction and inertia in the actuator and associated components resisting movement of the nut 16 and thus rotation of the shaft 10, the initial rotation of the carriage 28 in the retract direction will first be applied through the differential drive 27 to the secondary drive gear 36 returning the coupling 44 and member 50 to their right-hand most positions. Once the formations 46 reach the end of the helical groove 48, the secondary drive gear 36 effectively becomes earthed again and continued rotation of the carriage will cause drive to be applied through the differential drive 27 to the drive gear 34 and shaft 10, returning the nut 16 to its retracted, left-hand most position. During the return of the nut 16 to its retracted position, the final part of the movement of the nut 16 will push the member 50 against the action of the spring 54 until the projections 60 and recesses 62 become aligned, whereon the member 50 will return to its locked position under the action of the spring 54, locking the nut 16 and shaft 10 to one another. Where two projections 60 and two recesses 62 are provided, the movement of the member 50 against the action of the spring 54 will commence just under half a revolution of the shaft 10 before the nut 16 reaches its retracted position. The sensor 64 senses the return of the member 50, and can thus output a signal indicating that the actuator arrangement is locked. During the return movement, the ratchet mechanism of the no-back device 20 operates to avoid the application of the braking load to the shaft 10.

If, during the deployment cycle, the no-back device 20 fails or slips, the aiding tensile loading on the shaft 10 will urge the drive gear 34 forwards and the motor will be operating to apply a braking torque tending to slow the speed of deployment. Such operation causes the coupling 44 to be driven relative to the shaft 10 by the differential drive 27, the coupling 44 driving the member 50 axially relative to the shaft 10 back towards its locked position. The unexpected movement of the member 50 is sensed by the sensor 64 and used by the associated control circuit to produce a signal indicative of the failure of the no-back device 20 to apply the required braking load.

Although the arrangement described hereinbefore has two projections 60 and associated recesses 62, it will be appreciated that more or fewer projections 60 and recesses 62 may be provided, and that the timing at which the nut 16 engages the member 50 to urge it against the action of the spring 54, in the event of a no-back failure, will be adjusted accordingly.

As mentioned hereinbefore, if desired the no-back device 20 may apply a braking load during both extension and retraction of the actuator arrangement. In such arrangements, no-back failure during either part of the operating cycle will give rise to an unexpected movement of the member 50 which will be sensed by the sensor 64 and can be used to provide a signal indicative of a failure in the no-back device 20.

Although in the arrangement described hereinbefore, the member 50 serves both as an indicator member for use in sensing the operation of the no-back device 20 and as a lock member of the lock arrangement, it will be appreciated that separate components may be provided to perform these functions. The function of the indicator member may be provided by, for example, the coupling 44 or the secondary drive gear 36, if desired.

The arrangement of the invention is advantageous in that it permits the operation of the no-back device to be monitored, and adjustments made to the operation of the aircraft to accommodate sensed failures. Further, as a no-back failure can be sensed, it may be possible to use smaller motors and associated drive components than would otherwise be the case.

It will be appreciated that a wide range of modifications and alterations may be made to the arrangement described hereinbefore without departing from the scope of the invention.

## Claims

1. An actuator arrangement comprising a rotatable shaft (10), a no-back device (20) operable to apply a braking load to the shaft (10), a drive arrangement (26) operable to drive the shaft (10) for rotation, and an indicator member (50), wherein the drive arrangement (26) includes a differential drive (27) operable to drive the indicator member (50) for movement.

2. An arrangement according to Claim 1, wherein the indicator member (50) is movable axially of the shaft (10).

3. An arrangement according to Claim 1 or Claim 2, further comprising a sensor (64) monitoring the position or movement of the indicator member (50).

4. An arrangement according to any of Claims 1 to 3, further comprising stop means (44) to limit movement of the indicator member (50).

5. An arrangement according to any of Claims 1 to 4, further comprising a lock arrangement (60, 62) to lock a nut and the shaft (10) against relative rotation.

6. An arrangement according to Claim 5, wherein the lock arrangement includes a lock component (50) mounted for axial movement relative to the shaft (10) but held against angular movement relative to the shaft (10), the lock component (50) being co-operable with the nut (16) to lock the nut (16) to the shaft (10) and thereby prevent relative rotation therebetween.

7. An arrangement according to Claim 6, wherein the drive arrangement (26) is operable to drive the lock component (50) axially relative to the shaft (10) to release the lock arrangement.

8. An arrangement according to any of Claims 5 to 7, wherein the indicator member forms part of or is associated with the lock arrangement.

9. An arrangement according to Claim 8, wherein the indicator member forms at least part of the lock component.
